# EUROPEAN PATENT APPLICATION

(11) **EP 1 096 403 A2**
(43) Date of publication of application: **02.05.2001**
(21) Application number: 00123334.5
(22) Date of filing: 27.10.2000
(51) Int. Cl.: G06F 17/60

(54) **Network system**

(30) Priority: 29.10.1999 JP 30915799
(71) Applicant: FUJITSU LIMITED, Kawasaki-shi, Kanagawa 211-8588 (JP)
(72) Inventor: Monma, Hitoshi, Kawasaki-shi, Kanagawa 211-8588 (JP); Hayashi, Katsumi, Kawasaki-shi, Kanagawa 211-8588 (JP); Imajima, Yoshiaki, Kawasaki-shi, Kanagawa 211-8588 (JP); Nakajima, Mitsuru, Kawasaki-shi, Kanagawa 211-8588 (JP); Fujii, Mikako, Kawasaki-shi, Kanagawa 211-8588 (JP)
(74) Representative: Sunderland, James Harry

(57) **Abstract**

A network system, accounting processing device, manufacturing processing device and computer readable recording medium storing a program to process transactions requested by a client and received through a network and to conduct accounting of the transactions. The system includes an intermediary computer connected through a network to mediate processing request data forwarded from a user to a suitable content processing factory, and to mediate data forwarded from the content processing factory to the user. The intermediary computer receives the processing request data from a user and forwards the data to a content processing factory. The content processing stores the processing request data and forwards accounting information, including a processing request and a delivery date plus variable days α, to the intermediary computer, and forwards status reports to the user. The intermediary computer includes an accounting device to perform accounting based on the delivery date and processing request data, and sends a cancellation code to the content processing factory and to the user allowing cancellation of processing to be requested. The intermediary computer can request processing by automatically selecting a suitable content processing factory to conduct the processing. The network system may include a plurality of manufacturing processing devices, each of which include a device to set up financial information designating the delivery date based on a time period required to process the request from the client.

## Description

### INTRODUCTION

The present invention concerns a network marketing system which performs accounting processing and manufacturing processing, and a computer readable recording medium to implement a method of network marketing, and a computer program or programs for implementing the system or method.

### BACKGROUND OF THE INVENTION

### 1. Field of the Invention

The present invention relates to a network system, accounting processing device, and manufacturing processing device, to process transaction requests received from clients through a network and to conduct accounting of those transactions, and a computer readable recording medium encoded with processing instructions to implement a method of processing transaction requests received from clients through a network, and to conduct accounting of those transactions, and relates to a corresponding computer program.

### 2. Description of the Related Art

Network marketing systems are known wherein users can operate a computer to connect to the Internet, visit a specific electronic shopping web page, designate a displayed product (for example, clothing, books, etc.), pay by credit, and have the designated product delivered separately to the user's home by express mail, or other delivery system. In the known types of network marketing systems, however, the user selects one of the product groups displayed on the web page, purchases the product using credit, and separately has the product delivered. Thus, the known network marketing system is nothing more than the user side unilaterally receiving the applicable selected product by selecting one of the products that has been prepared by the web page side.

The known network marketing system results in problems in that purchasing a product depends on a process in which data is sent front the user to the web page, and the accounting process is very tedious if the processed product cannot be received.

### SUMMARY OF THE INVENTION

The present invention overcomes the problems of the known network marketing systems and provides a system to mediate user data sent by an intermediary computer connected to a suitable content processing factory via a network. Accounting processing is conducted by receiving accounting data that Includes a processing request as well as a delivery date plus a variable number of days α. A status report from the content processing factory is transmitted to the user, and it is possible to cancel processing by sending notification of a cancellation code to the user and the content processing factory. The processing can be requested by automatically selecting the content processing factory to conduct suitable processing. Suitable processing makes it possible to easily ship a processed product to the user, or to have an order cancelled by the user/content processing factory.

A user requests processing by sending data from a user terminal, which is preferably a personal computer (PC), to an intermediary computer through a network. The intermediary computer receives the processing request data from the user, forwards the received data to a content processing factory, and operates as an accounting processing device which manages the accounting.

The content processing factory, which is a manufacturing processing device, receives the data forwarded from the intermediary computer, conducts manufacturing processing, and replies to the intermediary computer with an accounting report that includes a fee and a delivery dare plus a variable number of days α.

In operation of the network system in accordance with the present invention, the intermediary computer receives data transmitted through the network from the user, and forwards the received data to the content processing factory. The content processing factory receives the data forwarded from the intermediary computer, and conducts manufacturing processing based on the received data. The content processing factory sends an accounting report back to the intermediary computer, and the intermediary computer conducts accounting processing based on the received accounting report. The accounting report sets up delivery information, including the delivery date and fee for the product to be manufactured. The accounting report sent back to the intermediary computer by the content processing factory adds a specific variable number of days α to the product delivery date.

Moreover, if the intermediary computer receives processing request data from the user, or if the intermediary computer receives accounting information from the content processing factory, the intermediary computer sends identification information, including notification of an accounting cancellation code, to the user and to the content processing factory. If necessary, the user or the content processing factory may notify the intermediary computer to cancel the accounting based on the accounting cancellation code.

Furthermore from the time that the content processing factory has received the processing request data until processing is complete and the product has been sent, the content processing factory will send status reports by e-mail, as necessary, to the intermediary computer and to the user through the intermediary computer.

Moreover, the content processing factory may request processing by forwarding data to another content processing factory. When the content processing factory requests processing by forwarding data to another content processing factory, a status report is received and forwarded to the intermediary computer.

Therefore, in accordance with the present invention, the intermediary computer (accounting processing device) that is connected through the network acts as an intermediary for the data sent from a user to the content processing factory (manufacturing processing device), and conducts accounting processing by receiving accounting information that includes a processing request and a delivery dare plus variable days α (delivery date information). A status report from the content processing factory is forwarded to the user, and the manufacturing processing may be cancelled by sending notification of a cancellation code to the user and to the content processing factory. Further, processing can be requested by automatically selecting a suitable content processing factory to conduct the processing. Suitable processing is conducted by the selected content processing factory and the processed product is delivered to the user. Alternatively, the user or the content processing factory can easily cancel the order.

### BRIEF DESCRIPTION OF THE DRAWINGS

These and other advantages of the present invention will become apparent and more readily appreciated from the following description of the preferred embodiments, taken in conjunction with the accompanying drawings, of which:
FIG. 1 is a block diagram of a network system in accordance with embodiments of the present invention.
FIG. 2A is a diagram illustrating subsidiary content processing in accordance with embodiments of the present invention.
FIG. 2B is a flowchart of an order processing operation in accordance with embodiments of the present invention.
FIG. 3 is a flowchart of an operational process for conducting payment and cancellation of payment in accordance with embodiments of the present invention.
FIGS. 4A and 4B are explanatory diagrams of the network system in accordance with embodiments of the present invention.

### DETAILED DESCRIPTION OF THE PREFERRED EMBODIMENTS

Reference will now be made in detail to the preferred embodiments of the present invention, examples of which are illustrated in the accompanying drawings, wherein like reference numerals refer to like elements throughout.

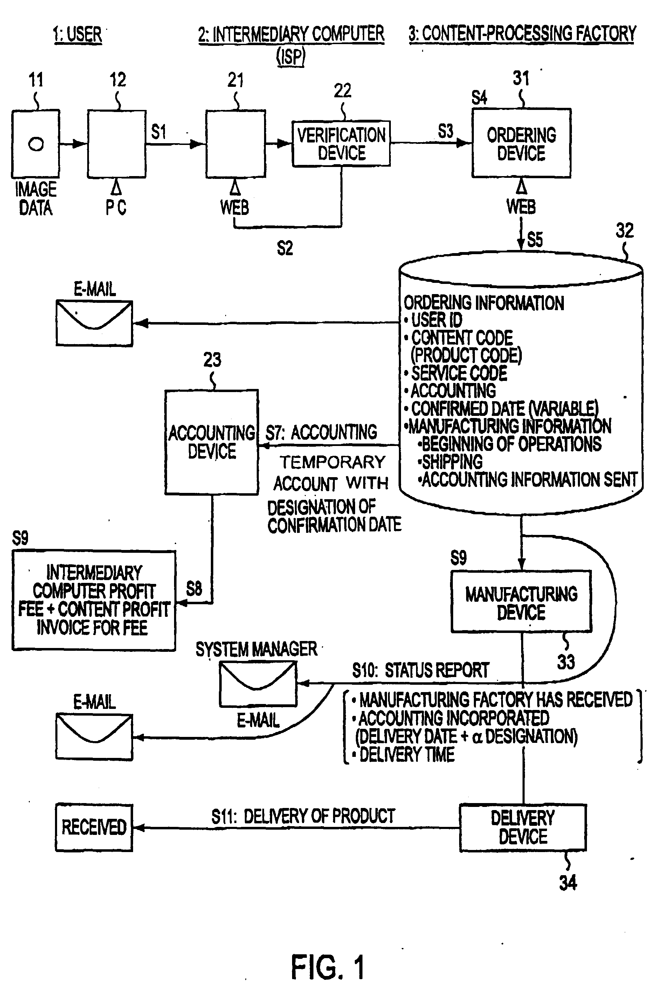

The network system, accounting processing device, manufacturing processing device and computer readable storage medium in accordance with embodiments of the present invention will be described below with reference to FIGS. 1 through 4.

FIG. 1 is a block diagram of a network system, accounting processing device and manufacturing processing device in accordance with embodiments of the present invention.

As shown in FIG. 1, a user 1 requests processing by sending data to an intermediary computer 2 through a network. The network through which data is sent to the intermediary computer 2 is preferably the Internet. The user 1 requests processing via a user terminal, which comprises a personal computer (PC) 12. In accordance with the embodiment shown in FIG. 1, image data 11 is incorporated into the PC 12, and is transmitted (uploaded) as data to a suitable web page on the intermediary computer 2 connected to the Internet. The Image data 11 may be image data photographed by a digital camera or the like image data entering device.

The intermediary computer 2 comprises a web server 21, a verification device 22, and an accounting device 23. The intermediary computer 2 receives data from the user 1, forwards the data to the content processing factory 3, and manages the accounting. In accordance with embodiments of the invention, the intermediary computer 2 acts as a so-called intermediary that includes a relay, and accounting processing, etc., such that only an applicable intermediary computer 2 is seen (i.e., is known) from the user 1 side, and the content processing factory 3 to which data is forwarded by the intermediary computer 2 cannot be seen from the user side. For example, the applicable intermediary computer 2 may be a particular web server 21 that is connected to the Internet, and which performs the operation of accessing a so-called web page on the web server 21. The access to the web page includes downloading data from the web page, and uploading data, such as image data, to the web page.

The web server 21 is a device that is connected to a network, such as the Internet, and allows the user 1 to access a web page, and offers various services. In accordance with the present invention, the user 1 selects, for example, the image of a product or service on an accessed web page, and image data, for example, image data of a photograph taken by a digital camera, is taken in. At this time, the intermediary computer 2 is notified of a user ID and a password of the user 1 which are verified by matching the notified user ID and password with a user ID and password that have been pre-recorded for members (clients). The verification device 23 is used to verify the user 1 based on the user ID and the password. If the verification is OK, the image data is uploaded to enable a processing request. Moreover, when transmitting and receiving data from the user 1, such as the user ID, password, and various other data, the web server 21 conducts a specified encryption, and the data transmitted and received by the user 1 cannot be stolen by other parties.

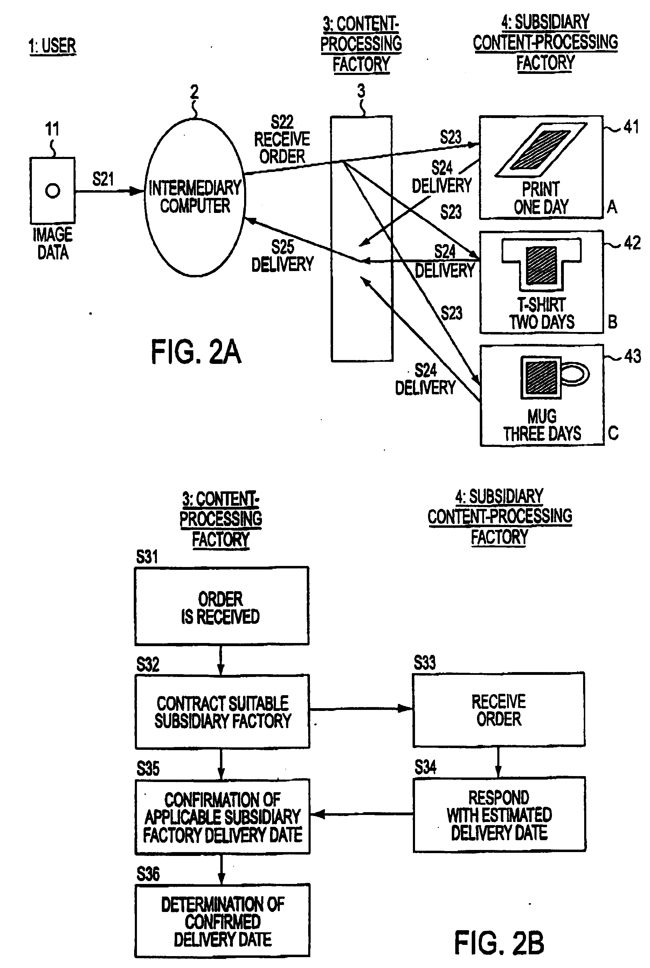

The accounting device 23 manages the accounting for all the users based on accounting information. A detailed description of the accounting device 23 will be provided below with reference to FIGS. 2 through 4.

The content processing factory 3 conducts processing, such as manufacturing, based on the data received, and sends a processed product to the user 1. The content processing factory 3 comprises an ordering device 31, ordering information 32, a manufacturing device 33, and a delivery device 34. In accordance with embodiments of the present invention, the image data sent from the user 1 may be printed out on paper, and then the image is printed on t-shirts and on mugs as a logo. After processing, the product is returned to the user 1. If the product cannot be sent to the user 1 via the Internet, the product is sent to the user 1 using normal delivery systems, such as express mail, etc.

The ordering device 31 is a device to receive orders by receiving image data manufacturing requests from the user 1.

The ordering information 32 includes various kinds of information, such as the information listed below, relating to the image data manufacturing requests received by the ordering device 31 from the user 1. The ordering information, such as that listed below, is recorded in a database and is managed.
- User ID
- Content code (product code)
- Service code
- Amount of money (accounting)
- Confirmation date (variable)
- Manufacturing information
- Beginning of operations
- Delivery
- Accounting information transmitted
- Other

The manufacturing device 33 manufactures the content corresponding to the order data. For example, as shown in FIG. 2A, which will be described in detail hereinafter, manufacturing is conducted by printing the image data on paper, and then printing the image as a logo on t-shirts, mugs, and the like.

The delivery device 34 delivers a product after processing (manufacturing). If the product can be sent through the network, then it is delivered to the user 1 through the network. However, if the product cannot be delivered through the network, then the product is delivered to the user separately by an existing delivery system, such as express mall, or the like. For example, if the product is photographs that have the image data printed on paper, then the product will be delivered through an existing delivery system.

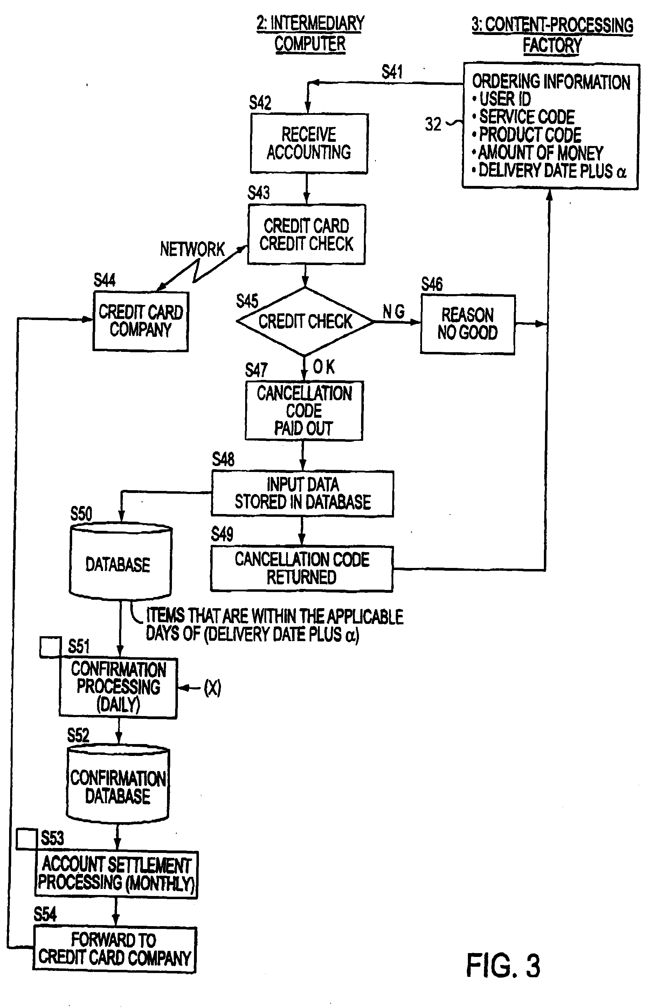

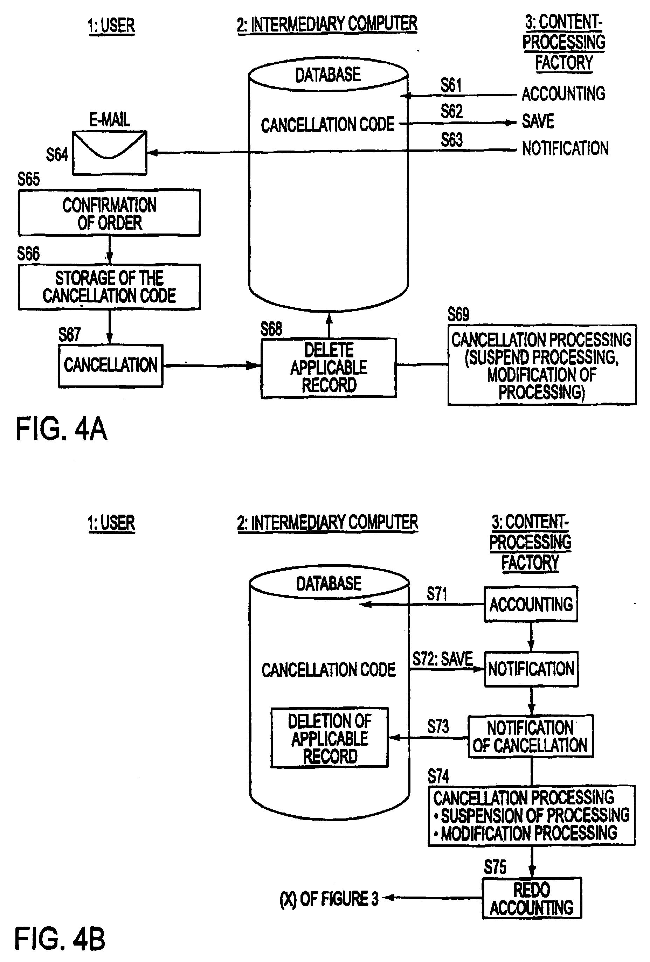

The intermediary computer preferable includes a computer readable recording medium storing a program to implement with the intermediary computer a method of accounting of processing requested through the network. The method of accounting comprises receiving accounting information from a content processing factory 3, including delivery date information for goods or services to be delivered by the content processing factory 3, which are targeted for accounting, and performing accounting based on the delivery date information included in the accounting information. The method of accounting will be described in more detail below with reference to FIGS. 3 and 4.

The operation of the network marketing system shown in FIG. 1 will now be described in detail below.

As shown in FIG. 1, in operation S1, the image data is read out by the PC 12 of the user 1 from a medium on which the image data is recorded, is relayed by the network (e.g., the Internet), and is transmitted (uploaded) to the applicable web page on the web server 21 of the intermediary computer 2. The image data is, for example, image data representing images photographed by a digital camera.

In operations S2 and S3, the web server 21 forwards the image data transmitted thereto in operation S1 to the content processing factory 3. That is, prior to operation S1, the user is allowed to access and display the applicable web page of the web server 21, and the verification device 22 verifies whether or not the user has correctly recorded membership status by entering the user's user ID and password in response to a prompt to enter the user ID and password. If the verification device 22 verifies that the user ID and password are correct (OK), then, when a service or product such as, for example, "print image data on paper" is selected from a table of products displayed on the specified web page, the image data is uploaded, and the intermediary computer 2 sends the uploaded image data to the content processing factory 3.

In operation S4, the ordering device 31 of the content processing factory 3 receives the image data and accepts the image data as an order. Next, in operation S5, the content of the order received in operation S4 is recorded as the ordering information 32.

In operation S6, the content processing factory 3 sends status information to the user 1 by electronic mail (e-mail). By sending status information to the user 1, the user 1 can receive electronic mail indicating the current status information. For example, the status information indicates whether the order has been received and operations begun, or whether the product is being shipped, etc., so that the user 1 can know the status of the requested manufacturing processing.

In operation S7, the content processing factory 3 sends the accounting information to the intermediary computer 2. The accounting information sent to the intermediary computer 2 includes not only the confirmation date designation, but also the accounting and a specified variable number of days α. More particularly, the accounting information designates the delivery period as the accounting data, specifically, the accounting wherein the user is charged a fee designated by the delivery date, and the specified variable number of days α is a number of days that are added to the delivery date in consideration of factors that may delay the normally scheduled delivery date, for example, a busy delivery time, including holidays such as New Years.

In operation S8, the accounting information of operation S7, such as the fee, the delivery date, and the variable days α, etc., is provided as accounting information to the user. The fee includes an intermediary computer 2 use fee plus contents use fee (i.e., manufacturing fee).

In operation S9, the content processing factory 3 conducts the manufacturing processing based on the image data it has received. For example, as shown in FIG. 2A, and described in greater detail hereinbelow, the manufacturing processing includes operations such as printing the image data on paper, and printing the image on t-shirts and mugs as a logo.

In operation S10, a status report is sent to the system manager of the intermediary computer 2 and to the user 1. The status report is set up and sent by electronic mail. The status report includes, for example, the status of beginning manufacturing or delivery notification. The manager of the intermediary computer 2 and the user 1 who have received the status report via electronic mail can be automatically notified of the beginning of manufacturing using the image data, manufacturing in progress, and the shipping status, etc.

Finally, in operation S11, the product that has been manufactured by the manufacturing device 33 is sent to the user 1 by the delivery device 34. If the delivery can be made through the network, the product is delivered as a file attached to an e-mail message, or the product may be stored on a personal web page of the applicable user 1 on the intermediary computer 2, and can be retrieved (downloaded) at any time. If it is not possible to deliver the manufactured product through the network, the product is delivered to the user 1 by utilizing an existing delivery system, for example, a delivery system such as express mail.

As described above, in accordance with the embodiment shown in FIG. 1, when the user 1 requests processing by sending data to the intermediary computer 2, the intermediary computer 2 forwards the processing request data to the content processing factory 3 in a manner that cannot be seen by the user 1, and the applicable content processing factory 3 conducts processing of the received data. The intermediary computer 2 also transmits the processing status information successively to the system manager of the intermediary computer 2 and to the user 1 by e-mail, and the finished product that has been manufactured is sent to the user 1 through the network, or the finished product can be delivered to the user 1 using an existing delivery system (for example, express mail). When the content processing factory 3 has received an order from the user 1, the accounting information, such as the delivery date and specified variable days α, and the fee, are sent to the intermediary computer 2, and the applicable intermediary computer 2 can conduct the accounting in a comprehensive manner.

FIGS. 2A and 2B are explanatory diagrams of the operation of the content processing factory 3 in accordance with embodiments of the present invention. More specifically, FIG. 2A illustrates schematically an operation of the content processing factory 3 shown in FIG. 1 further selecting a suitable subsidiary content processing factory 4 from among a plurality of subsidiary content processing factories 4, and requesting manufacturing by sending the data to the subsidiary content processing factory 4. The operations of the user 1 and the intermediary computer 2 in FIG. 2A are the same as that described above with reference to FIG. 1, and a detailed explanation of these elements will not be repeated here.

As shown in FIG. 2A, the content processing factory 3 receives the transmission of order data from the intermediary computer 2 (S22), and conducts the processing. In accordance with the embodiment shown in FIGS. 2A and 2B, the applicable processing can be executed by the plurality of subsidiary content processing factories 4, or the most available subsidiary content processing factory 4 can be selected and a processing request made by forwarding the processing request data (S23). For example, one of the subsidiary content processing factories capable of processing can be selected from among a subsidiary content processing factory 41 that prints the image data on paper, a subsidiary content processing factory 42 that prints the image on a T-shirt, and a subsidiary content processing factory 43 that prints the logo on a mug, and a processing request can be made by forwarding the data to the selected subsidiary content processing factory 4.

The subsidiary content processing factory 4 executes processing when it has received the processing request data forwarded from the content processing factory 3, and a status report including the processing progress and the delivery status, etc., is set up by e-mail. The status report is sent back to the manager of the intermediary computer 2 and to the user 1.

The operation of the embodiment shown in FIG. 2A will now be described in detail with reference to the flow chart shown FIG. 2B. As shown in FIG. 2B, in operation S31, the content processing factory 3 receives an order from the user. Next, in operation S32, the applicable subsidiary content processing factory 4 is contracted. More particularly, in operation S32, the content processing factory 3 that has received the order from the user 1 contracts the subsidiary content processing factory 4 that is selected to execute the applicable order processing, and the processing data is sent (forwarded).

In operation S33, the subsidiary content processing factory 4 receives the order. That is, the subsidiary content processing factory 4 receives the order by having the data received by the content processing factory 3 in operation S32 forwarded from the content processing factory 3.

In operation S34, the subsidiary content processing factory 4 that is contracted in operation S32 makes an estimate and responds with an estimated delivery date. More particularly, the subsidiary content processing factory 4 that was contracted in operation S32 sends to the content processing factory 3 notification of a period of the contracted processing, for example, up to the completion of printing the image on a T-shirt and shipping (delivery date), and notification of the number of variable days α, which varies depending on backorders and vacations, etc.

In operation S35, the content processing factory 3 verifies the applicable subsidiary content processing factory delivery date. That is, the content processing factory 3 verifies the delivery date and the variable days α of the subsidiary content processing factory 4 that received notification in operation S34.

In operation S36, the confirmation delivery date is determined. That is, the delivery date based on the delivery date and variable days α that were received in operation S35 are determined as is, or the period wherein the delivery date plus variable days α are added because the manufacturing of products is backlogged is determined as the verified delivery date. Then, the accounting information including the verified delivery date and the product fee are forwarded to the intermediary computer 2 (S7 in FIG. 1). Next, the accounting device 23 shown in FIG. 1 conducts accounting for the user in the same manner described above with reference to FIG. 1 by the applicable verified delivery date, and an invoice is forwarded to the user (S8 in FIG. 1).

As described above, in accordance with the embodiment shown in FIG. 2, the content processing factory 3 conducts manufacturing by forwarding the processing data to an applicable subsidiary content processing factory 4 and requests processing (places an order). The decision regarding the confirmed delivery date is based on the delivery date (delivery date plus variable days α) determined in the response in the subsidiary content processing factory 4. The accounting information, including the delivery date plus the variable days α and the fees, is notified to the intermediary computer 2, and the applicable intermediary computer 2 manages the accounting information and sends an invoice to the user 1.

FIG. 3 is a flow chart of an operational process for conducting payment and cancellation of payment in accordance with embodiments of the present invention. More particularly, FIG. 3 is a flow chart of an operational process explaining in detail the credit when settling accounts by credit card, a cancellation code, and the accounting confirmation (closing). The intermediary computer 2 and the content processing factory 3 shown in FIG. 3 operate in the same manner as described with reference to FIG. 1 and FIG. 2, and a detailed description of these elements will not be repeated here.

As shown in FIG. 3, in operation S41, the content processing factory 3 sends the intermediary computer 2 notification of the ordering information 32 (such as the user ID, the service code, the product code, the amount of money, and the delivery date plus variable days α, etc.). Next, in operation S42, the intermediary computer 2 receives the ordering information 32 sent in operation S41.

In operation S43, a credit card check is conducted to match credit information. In operation S44, the credit company checks the credit information and responds with credit OK or No Good (NG) corresponding to whether the credit information of operation S43 matches. In operation S45, it is determined whether the response is credit OK or No Good (NG). If the response is OK, the operational process proceeds to operation S47. If the response is No Good (NG), in operation S46, the content processing factory 3 is sent notification of the reason that the credit was No Good, and execution of the order processing is suspended.

When the credit information is determined to be OK in operation S45, a cancellation code is paid out in operation S47. In operation S48, the input data is stored in a database. That is, the intermediary computer 2 saves the ordering information, the credit cancellation code, etc., by storing this information in a database.

In operation S49, the cancellation code is returned to the content processing factory 3. The content processing factory 3 that has received the returned cancellation code saves the cancellation code in the ordering information, and if the processing is suspended it is possible to cancel the applicable order (accounting) by sending notification of the applicable cancellation code to the intermediary computer 2. Processing may be suspended, for example, if it is judged that the paper on which the image data is printed is twisted and is not a suitable. product.

In operation S50, the intermediary computer 2 manages the credit information, cancellation code, and ordering information by saving the data in a database. In operation S51, the database in which the data was stored in operation S50 is searched, the records within the applicable date of delivery (delivery date plus variable days α) are read out, and the confirmation processing is conducted. For example, the confirmation processing is conducted on the following day. In operation S52, the confirmation data processed in operation S51 is stored in the confirmation database.

In operation S53, account settlement processing is conducted. The account settlement processing is preferably conducted monthly. That is, the description of the orders and the corresponding amount of money by user is tallied every month, specifically, from a specified day of a specified month until the specified day of the following month.

In operation S54, the results of the account settlement processing are forwarded to the credit card company. That is, a request is made to transfer money for all the users tallied in operation S43, for example, for the month, to a specified account of the company of the intermediary computer 2 by withdrawing from the bank account at the user's banks.

In accordance with the operations described above with reference to FIG. 3, the processing data is stored as ordering information, wherein the content processing factory 3 has received an order from the user 1 who has forwarded the order in real time through the intermediary computer 2. Then, it is possible to cancel the order with the applicable cancellation code by acquiring the credit information of the card company and generating a cancellation code based on the ordering information received by the intermediary computer 2 in the notification from the content processing factory 3 and by notifying the content processing factory 3 and the user 1 (not shown in the FIG. 3). The amount invoiced to each user can be forwarded to the credit card company by storing the ordering information in the database and conducting monthly settlement of accounts, etc.

FIGS. 4A and 4B are diagrams illustrating cancellation operations in accordance with embodiments of the present invention.

More particularly, FIG. 4A is a diagram illustrating operations performed when an order has been cancelled by the user 1 providing notification with the cancellation code. As shown in FIG. 4A, when the content processing factory 3 has received an order from the user 1, notification of the accounting information is sent to the intermediary computer 2, and the intermediary computer 2 records the ordering information in the database (DB) in operation S61. In operation S62, the intermediary computer 2 generates a cancellation code, notifies the content processing factory 3 of the cancellation code, and the content processing factory 3 stores the cancellation code together with the ordering information.

In operation S63, the ordering information (a part of the ordering information), including the cancellation code received from the intermediary computer in operation S62, is sent from the content processing factory 3 to the user 1 by electronic mail.

In operation S64, the user 1 recieves the electronic mail (e-mail). In operation S65, the order is confirmed. In operation S66, the cancellation code is read from the electronic mail and stored. In operation S67, the user sends notification of the order cancellation, including the cancellation code, to the intermediary computer 2.

In operation S68, the intermediary computer 2 that has received the cancellation notification with the cancellation code attached in operation S67 searches the database and cancels the applicable record (ordering information). Further, in operation S68, the intermediary computer 2 also sends notification of the cancellation code to the content processing factory 3. In operation S69, the content processing factory 3, which has received notification of the cancellation code in operation S68, conducts cancellation processing. Cancellation processing suspends processing or modifies processing, etc.

According to the embodiment described above with reference to FIG. 4A, the contents of the order which the user has placed with the content processing factory 3 through the intermediary computer 2, and the reply with the cancellation code are both received via e-mail and stored. Then, when notification of cancellation of the order is sent by designating the cancellation code, the intermediary computer 2 cancels the order contents (ordering information). Therefore, processing can be suspended or modified by sending notification of the cancellation code to the content processing factory 3 as well.

FIG. 4B is a diagram illustrating cancellation of an order by the content processing factory 3 sending notification with the cancellation code in accordance with embodiments of the present invention.

As shown in FIG. 4B, in operation S71, notification of the accounting information is sent from the content processing factory 3 to the intermediary computer 2, and the intermediary computer 2 records the ordering information in the database (DB) when the content processing factory 3 has received the order from the user 1.

In operation S72, the intermediary computer 2 generates a cancellation code and notifies the content processing factory 3 of the cancellation code, and the content processing factory 3 stores the cancellation code together with the ordering information.

In operation S73, the content processing factory 3 extracts the cancellation code that was received and stored in operation S72, and sends notification of the cancellation code together with the cancellation notification to the intermediary computer 2. The intermediary computer 2 erases from the database the ordering information related to the cancellation code.

In operation S74, the content processing factory 3 conducts cancellation processing. Cancellation processing involves suspension of processing or modification of processing.

In operation S75, accounting is conducted again. Then, if included daily, the applicable record is erased during the confirmation processing in operation S51 in FIG. 3, and the monthly processing, etc., is conducted.

In accordance with the embodiments of the invention described above, if, in the middle of processing based on an order received by the content processing factory 3, wrinkles appear in the printed paper and there is no value as a product, it is possible to cancel the order and suspend processing by sending notification with the cancellation code to the intermediary computer 2.

As described hereinabove, according to the present invention, the intermediary computer 2 that is connected through a network mediates data forwarded from the user 1 to a suitable content processing factory 3, receives accounting information that includes the processing request as well as the delivery date plus variable days α, and conducts accounting processing.

In accordance with embodiments of the present invention, because a status report from the content processing factory 3 is sent to the user 1, and it is possible to cancel an order by sending notification with a cancellation code to the user 1 and the content processing factory 3, processing can be requested by automatically selecting a suitable content processing factory 3 to conduct the processing. Therefore, suitable accounting, delivery of the processed product to the user 1, and cancellation of the order by the user 1 and/or the content processing factory 3 can all be easily accomplished.

This application is based upon and claims priority of Japanese Patent Application No. 11-309157, filed October 29, 1999, the contents being incorporated herein by reference.

Embodiments of the invention relate to a network system, accounting processing device, manufacturing processing device and computer readable recording medium storing a program to process transactions requested by a client and received through a network and to conduct accounting of the transactions. The system includes an intermediary computer connected through a network to mediate processing request data forwarded from a user to a suitable content processing factory, and to mediate data forwarded from the content processing factory to the user. The intermediary computer receives the processing request data from a user and forwards the data to a content processing factory. The content processing factory stores the processing request data and forwards accounting information, including a processing request and a delivery date plus variable days α, to the intermediary computer, and forwards status reports to the user. The intermediary computer includes an accounting device to perform accounting based on the delivery date and processing request data, and sends a cancellation code to the content processing factory and to the user allowing cancellation of processing to be requested. The intermediary computer can request processing by automatically selecting a suitable content processing factory to conduct the processing. The network system may include a plurality of manufacturing processing devices, each of which include a device to set up financial information designating the delivery date based on a time period required to process the request from the client.

Although preferred embodiments of the present invention have been shown and described, it will be appreciated by those skilled in the art that changes may be made in these embodiments without departing from the principle and spirit of the invention, the scope of which is defined in the appended claims and their equivalents.

## Claims

1. A network system to perform processing based on a transaction request from a client connected via a network, and to conduct accounting of the requested transaction, comprising:
a processing device, the processing device comprising an ordering device to specify accounting information including a delivery date based on a period necessary to process the transaction request from the client; and
an accounting processing device to conduct accounting based on the accounting information including the delivery daze specified by the processing device.

2. A network system as recited in claim 1, wherein the delivery date information includes a specified variable number of days added to the period necessary to process the client transaction request.

3. A network system as recited in claim 1, wherein the accounting processing device includes provides identification information regarding cancelling the accounting to at least one of the client and the processing device in response to receiving accounting information from a processing device; and
further comprising a cancellation device to issue a cancellation request to cancel the accounting based on the identification information provided by the accounting processing device.

4. A network system as recited in claim 1, wherein the accounting processing device includes a notification device to notify the manufacturing processing device that the accounting information has been received in response to an accounting cancellation request received from a client.

5. A network system as recited in claim 1, wherein the processing device notifies the client of the status of the processing, including delivery date information.

6. A network system as recited in claim 1, wherein the processing device issues processing requests to a plurality of processing devices which perform client processing, and sets up the accounting information based on the delivery date information received from the plurality of processing devices.

7. A network system as recited in claim 1, wherein the processing device comprises a plurality of processing devices to process client transaction requests.

8. An accounting processing device to process accounts requested through a network, comprising:
an accounting device to receive accounting information, including delivery date information for goods or services targeted for accounting, and to conduct accounting based on the delivery date information.

9. An accounting-processing device as recited in claim 7, further comprising:
an identification device to provide identification information to a requesting party, the identification information being used to cancel the accounting when accounting information has been received through the network; and
a cancellation device to cancel the accounting based on a cancellation request specifying the identification information provided to the requesting party.

10. A manufacturing processing device to perform processing in response to a request received from a client via a network, comprising:
an accounting device to set up accounting information including a delivery date based on a time required to process the request from the client; and
a transmitting device to transmit the accounting information to an accounting processing device to conduct accounting.

11. A computer readable recording medium storing a program to implement with a computer a method of accounting of processing requested through a network, the method comprising:
receiving accounting information including delivery date information for goods or services targeted for accounting; and
conducting accounting based on the delivery date information included in the accounting information.

12. A network system, comprising:
an order request device to enter order data related to an order for goods or services;
a processing device to process the order data and to generate ordering information related to the order; and
an intermediary device, connected to the order request device via a network and connected to the processing device, to receive the order data and the ordering information related to the order, and to generate transaction information related to the order based on the order data and ordering information.

13. A network system as recited in claim 12, wherein the ordering information generated by the processing device is a delivery date for the order plus a variable number of days, the transaction information generated by the intermediary device is accounting information, and the intermediary device forwards the accounting information to the order request device.

14. A network system as recited in claim 12, wherein the transaction information generated by the intermediary device is a cancellation code used to cancel the order for goods or services, and the intermediary computer notifies the processing device of the cancellation code.

15. A network system as recited in claim 14, wherein the processing device forwards the cancellation code to the intermediary device to cancel the order.

16. A network system as recited in claim 14, wherein the processing device forwards the cancellation code to the order request device, and the order is cancelled by forwarding the cancellation code from the order request device to the intermediary computer which cancels the order.

17. A network system as recited in claim 12, wherein the order request device comprises a personal computer and the order request data includes image data used in connection with the ordered goods or services.

18. A network system as recited in claim 12, wherein the network system processing device comprises a plurality of processing devices to process the order data and a plurality of order request devices to enter order data, and the intermediary device generates accounting data for the plurality of processing devices and the plurality of order request devices.

19. A network system as recited in claim 12, wherein the processing device provides a status update regarding the order for goods and services to the order request device.

20. A network system as recited in claim 12, wherein the intermediary device comprises a server and the order request device is connected to the intermediary device via the Internet.
